# DEMANDE DE BREVET EUROPEEN

(11) **EP 3 225 310 A1**
(43) Date de publication de la demande: **04.10.2017**
(21) Numéro de dépôt: 16163345.8
(22) Date de dépôt: 31.03.2016
(51) Int. Cl.: B01L 3/00

(54) **MEMBRANES D'ANALYSE DE DISPOSITIFS MICROFLUIDIQUES, RÉALISÉES EN UN MATÉRIAU EN FIBRE DE VERRE**

(71) Demandeur: Biomérieux, 69280 Marcy L'etoile (FR)
(72) Inventeur: Boulet, Laurent, 69290 Pollionnay (FR); Foucault, Frédéric, 69280 Marcy l'Etoile (FR); Rozand, Christine, 69290 Saint Genis les Ollières (FR); Rubens, Agnès, 01090 Montceaux (FR)

(57) **Abrégé**

L'invention concerne une membrane d'analyse de/pour dispositif microfluidique réalisée d'un seul tenant en un matériau, absorbant diffuseur de liquide, de composition à base de fibre de verre, aux travers de laquelle un échantillon biologique une fois déposé sur ladite membrane d'analyse progresse par capillarité et est soumis à au moins une analyse qualitative et/ou quantitative,
ladite membrane d'analyse comprend :
- au moins une zone dite zone de dépôt,
- au moins une zone dite zone de réaction,
- un ou plusieurs canaux assurant une communication fluidique entre chaque zone de dépôt et chaque zone de réaction ;
et est caractérisée en ce qu'elle comprend au moins une zone de réaction dans laquelle au moins un réactif se trouve adsorbé directement audit matériau diffuseur de liquide en fibre de verre, ou indirectement grâce à un agent de couplage ; ladite au moins une zone de réaction est localisée dans un espace de la membrane d'analyse où la vitesse de diffusion des liquides est ralentie.

## Description

La présente invention a trait au domaine général de la microfluidique. Elle concerne plus particulièrement les dispositifs microfluidiques à visée diagnostique, ainsi que les procédés de fabrication de tels dispositifs.

La microfluidique peut être définie comme l'étude des phénomènes qui régissent le mouvement de petits volumes de fluide, notamment de liquide. Elle englobe le développement de systèmes et de dispositifs permettant de faire circuler et/ou de manipuler de petits volumes de fluides et ce, à des fins très diverses comme, par exemple :
- pour mélanger, voire pour faire réagir, tout ou partie des constituants d'un ou de plusieurs fluides, entre eux et/ou avec des composés exogènes,
- pour séparer certains constituants d'un fluide, éventuellement en vue d'en analyser les propriétés chimiques et/ou physiques,
- pour détecter, voire pour doser, des agents cibles dont on suspecte la présence.
La microfluidique trouve ainsi des applications dans de nombreux domaines techniques.

Dans le domaine de la clinique, les tests de diagnostic mettant en oeuvre des dispositifs microfluidiques ont connu une rapide évolution depuis ces deux-trois dernières décennies (Yetisen et al., 2013 - Lab Chip, 2013 (13) 2210-2251 : « Paper-based microfluidic point-of-care diagnostic devices »).

Aussi désignés par « capteurs microfluidiques », ces dispositifs rendent non seulement possible l'analyse de petits volumes d'échantillons liquides, ils permettent également d'entreprendre, sur une seule et même plateforme d'analyse, une pluralité de tests de détection, voire de quantification, d'analytes et/ou d'agents pathogènes cibles et ce, par une manipulation simple et rapide.

La présente invention s'intéresse plus précisément aux dispositifs microfluidiques à usage unique, du type de ceux qui comprennent une membrane d'analyse réalisée dans un matériau poreux et qui fonctionnent selon un principe dit de mouvement latéral des fluides, en l'occurrence des liquides.

Le principe général de fonctionnement de ce type de dispositif microfluidique repose essentiellement sur une membrane d'analyse confectionnée/façonnée à partir d'une feuille de matériau poreux, hydrophile et absorbant, sur laquelle et dans la masse de laquelle est ménagé un réseau hydrophile formé de zones d'intérêt et des canaux. A l'intérieur et au travers ce réseau de zones d'intérêt et de canaux, un liquide à analyser (par exemple un échantillon biologique liquide), une fois déposé sur ladite membrane d'analyse, peut progresser par simple capillarité et être soumis à une analyse ou une série d'analyses qualitatives et/ou quantitatives de ses constituants (immunodétection, détection moléculaire, test d'affinité, test de couplage ligand-récepteur, évaluation du pH...).

De manière très schématique, sur les membranes d'analyse des dispositifs microfluidiques, il peut être distingué :
- des zones dites zones de dépôt, au niveau desquelles les liquides à analyser sont déposés,
- des zones dites zones de réaction, au niveau desquelles ont lieu les réactions de détection et/ou de dosage,
- éventuellement, des zones mixtes qui font office simultanément de zones de dépôt et de zones de réaction,
- éventuellement, des zones dites zones réservoirs, au niveau desquelles des réactifs et/ou additifs nécessaires aux réactions à mener sont stockés, généralement sous forme sèche avant d'être réhydratés (ou solubilisés) et transférés vers des zones de réaction spécifiques,
- éventuellement, des zones de dépôt secondaires, qui seront alimentées en réactif(s) et/ou en additif(s), extemporanément et/ou au cours du processus d'analyse, et
- des structures formant canaux qui assurent une conduction fluidique entre les zones d'intérêt, et à travers lesquelles les liquides progressent par un simple phénomène de capillarité.

Actuellement, les membranes d'analyse pour dispositifs microfluidiques, confectionnées à partir d'une feuille de matériau poreux, hydrophile et absorbant, sont façonnées principalement selon trois modes de conception.

Dans le premier mode, notamment exemplifié dans WO 2010/102294, WO 2010/003188 et WO 2008/049083, ces membranes d'analyse ont une forme bidimensionnelle qui peut être qualifiée de forme pleine et leur géométrie générale est relativement simple (par exemple, un rectangle, un carré, un disque...). Sur ces membranes d'analyse, les réseaux hydrophiles (zones de dépôt, zones de réaction, zones mixtes et/ou zones réservoirs, canaux de conduction fluidique) sont tracés et circonscrits au moyen de structures en matériau(x) solide(s) et hydrophobe(s), implantées à travers l'épaisseur même de la membrane d'analyse et formant ainsi des barrières étanches aux liquides.

Dans un deuxième mode, notamment exemplifié par US 2008/0317633, les membranes d'analyse ont une forme bidimensionnelle qui peut être qualifiée de forme élaguée ou découpée. De telles membranes d'analyse sont découpées dans une feuille de matériau poreux, hydrophile et absorbant, précisément en suivant le contour extérieur du réseau hydrophile que forment les différentes zones d'intérêt et les canaux de conduction fluidique.

Dans un mode mixte, notamment décrit par Fan et al., 2013 (Nano/Micro Engineered and Molecular Systems (NEMS), 2013 - 8th IEEE International Conférence: «Low-cost rapid prototyping of flexible plastic paper based microfluidic devices ») ont également une forme qui peut être qualifiée de forme pleine. Ces membranes d'analyse sont façonnées/usinées à partir d'une feuille de matériau poreux, hydrophile et absorbant, dont la face inférieure est revêtue d'un film de renfort mécanique. Sur ces membranes d'analyse, le réseau hydrophile est tracé et délimité non pas par des barrières étanches implantées à travers l'épaisseur même de la membrane d'analyse, mais par le vide laissé après un enlèvement de matière poreux et hydrophile. Cet enlèvement de matière peut être réalisé au moyen de techniques d'usinage très diverses, notamment gravure, ablation. De nos jours, le laser permet une mise en oeuvre rapide et précise de ces techniques d'usinage.

Quel que soit le mode de conception choisi, parce que lesdites membranes d'analyse ont longtemps été réalisées à partir d'une feuille en fibre de cellulose ou de nitrocellulose, l'appellation « µPAD » (pour *"microfluidic paper-based analytical devices ",* en anglo-saxon) a été largement adoptée pour faire référence aux dispositifs microfluidiques à usage de diagnostic qui intègrent dans leur structure de telles membranes d'analyse.

Jusqu'à présent, ce type de matériau, n'a pas permis la réalisation de membranes d'analyse pour dispositifs microfluidiques qui soient pleinement satisfaisantes. Du fait des volumes extrêmement faibles à manipuler (à peine quelques dizaines de microlitres), les échantillons liquides à analyser sont très sensibles à l'assèchement. L'hygrométrie, la température, la ventilation ambiante sont autant de paramètres qui influent sur la vitesse d'assèchement des échantillons. Qui plus est, au fur et à mesure que l'échantillon liquide s'étale à travers la membrane d'analyse, la vitesse d'assèchement augmente ainsi que la viscosité, freinant de surcroit la diffusion de l'échantillon. Selon les conditions dans lesquelles les analyse sont mises en oeuvre, les échantillons à analyser n'arrivent pas toujours en quantité suffisante au niveau des zones de réaction.

Pour remédier à ce problème, plusieurs approches sont investiguées. Une de ces approches consiste à optimiser la typographie des membranes d'analyse, notamment pour réduire les distances d'acheminement des liquides à analyser vers les zones de réaction. Une autre approche vise à améliorer les performances des substrats de cellulose et de nitrocellulose existant, par exemple en fonctionnalisant les fibres, et/ou à proposer de nouveaux matériaux fibreux aux propriétés améliorées en termes d'hydrophilie et/ou d'absorption et/ou de conduction des fluides.

A cet égard, à titre d'exemples de matériaux actuellement disponibles et connus pour la confection de membranes d'analyse de dispositifs microfluidiques, on citera en particulier les matériaux à base de fibres de cellulose (y compris de coton et de linter), de verre, de soie, de viscose, de polypropylène, de polyester, de filpolyamide (Nylon®), de poly(acide lactique) ou PLA. Lesdites fibres peuvent éventuellement être fonctionnalisées et/ou chargées et/ou dopées d'additifs (par exemple, talc, diatomite...).

Dans ce contexte, Fang et al., 2014 (Lab Chip, 2014 (14) 911-915 : «paper-based microfluidics with high résolution cut on a glass fiber membrane for bioassays ») décrit une membrane d'analyse, de forme élaguée, entièrement réalisée dans un matériau absorbant et diffuseur de liquide, de composition à base de fibre de verre. Celle-ci est façonnée selon la configuration souhaitée, par une découpe mécanisée d'une feuille en fibre de verre au moyen d'une découpeuse Cricut Expression® (PROVO CRAFT @ NOVELTY, Etats-Unis), ladite feuille en fibre de verre ayant été préalablement contrecollée sur un film de renfort en PVC. Un matériau en fibre de verre est ici préféré aux matériaux en fibre de (nitro)cellulose, pour sa plus grande hydrophilie et sa plus grande mouillabilité, qui donnent lieu à une bien meilleure conductance et conductivité aux liquides.

La membrane d'analyse est configurée avec une zone circulaire centrale, formant zone de dépôt destinée à recevoir un échantillon liquide à analyser. A partir de cette zone dépôt rayonnent huit canaux, chacun débouchant sur une zone circulaire périphérique de circonférence plus petite et formant zone de réaction. A des fins d'analyse urinaire, ces zones de réaction sont préparées pour l'évaluation du pH, la détection de glucose, de diverses protéines, des nitrites, des corps cétoniques... Les réactifs nécessaires aux différentes détections sont déposés, sous la forme de solutions, dans les zones de réaction qui leur correspondent. Le séchage de la membrane prend une heure, sous conditions ambiantes.

La capacité des matériaux en fibre verre à pouvoir transférer les liquides avec une très grande vitesse est décrite par Fang *et al.,* 2014 comme un avantage certain pour la microfluidique. Néanmoins, lorsqu'il s'agit de concevoir des membranes d'analyse à partir de tels matériaux, cette grande vitesse de transfert/diffusion des liquides occasionne des difficultés qui sont difficiles à surmonter pour à un homme du métier. En effet, la fonctionnalisation des zones de réaction est ici mise en oeuvre essentiellement par des techniques d'adsorption, utilisant des réactifs en solution dans un tampon d'adsorption. Une fois les réactifs déposés sur la membrane en fibre de verre, ceux-ci sont censés pénétrer le matériau et se fixer aux constituants du matériau (essentiellement des fibres et des liants), par simple adsorption. L'adsorption des réactifs n'est pas instantanée, mais se fait de manière progressive au rythme de l'évaporation du tampon d'absorption. Compte tenu de la rapide diffusion des réactifs au travers de la membrane en fibre de verre et du fait que les zones de réaction sont ouvertes sur le reste du réseau hydrophile, il s'avère difficile de circonscrire l'adsorption des réactifs à l'intérieur même des zones de réaction. Les réactifs ont une forte tendance à diffuser hors des zones de réaction avant de s'adsorber au matériau. Ces fuites de réactifs ont comme conséquences :
- une dilution des réactifs dans les zones de réaction, et donc une perte de sensibilité du signal de détection, mais également
- un risque de contamination d'une zone de réaction par un réactif provenant d'une zone de réaction voisine, et une perte de fiabilité du dispositif d'analyse.

D'autres comme Songjaroen et al., 2012 (Lab Chip, 2012 (12) 3392-3398 : « Blood separation on microfluidic paper based-analytical devices ») ou encore EP 2 226 635 ont opté pour des membranes d'analyse composites, c'est-à-dire des membranes formées à partir d'une pluralité de pièces de différents matériaux, assemblées les unes aux autres pour former une succession de zones de fonctionnalité(s) particulière(s). Pour chacune de ces zones de fonctionnalité(s) particulière(s), le matériau correspondant a été spécifiquement sélectionné pour des degrés d'hydrophilie, de porosité et/ou de mouillabilité particuliers. Lorsque les matériaux choisis pour les zones de réaction présentent une vitesse de diffusion des liquides jugée trop élevée, chaque zone de réaction est indépendamment façonnée dans le matériau choisi (par exemple par imprégnation à la cire, par gravure ou par découpe) puis fonctionnalisées isolément des autres parties constitutives de la membrane d'analyse à réaliser. Ce n'est qu'après la fixation/adsorption des réactifs, que les zones de réaction sont assemblées au reste de la membrane d'analyse.

Songjaroen *et al.,* 2012 décrit ainsi un dispositif microfluidique destiné à l'analyse des protéines plasmatiques à partir d'échantillons de sang total. La membrane d'analyse est formée par l'assemblage de deux pièces de matériaux différents ; l'une est découpée dans une feuille en fibre de verre (à savoir, un papier filtre MF1) et l'autre, dans une feuille en fibre de cellulose (en l'occurrence un papier filtre Whatman™ No. 1). Dans la partie en fibre de verre, est ménagée une zone de dépôt. Au niveau de la jonction entre les deux parties fibreuses, cette zone de dépôt s'ouvre sur un canal ménagé dans la partie en fibre de cellulose. Ce canal principal progresse à travers la partie en fibre de cellulose avant de se diviser en deux canaux secondaires, chacun débouchant sur une zone de réaction. Les zones d'intérêt et les canaux de la membrane d'analyse sont tracés et délimités à la cire solide, par une méthode d'imprégnation à la cire. Pour la zone de dépôt, le matériau en fibre de verre a été choisi pour sa capacité à pouvoir filtrer le sang total et permettre une séparation entre le plasma et les cellules sanguines. Les cellules sont retenues dans la zone de dépôt en fibre de verre, alors que le plasma diffuse hors de la fibre de verre en direction de la partie en fibre de cellulose, puis à travers les canaux tracés avant d'atteindre les zone de réaction. Le matériau en fibre de cellulose a été choisi pour ses propriétés de conduction fluidique permettant un bon transfert du plasma de la zone de dépôt aux zones de réaction.

Le dispositif microfluidique décrit par EP 2 226 635 a été conçu quant à lui spécifiquement pour l'immunodétection de *Mycobacterium tuberculosis.* La membrane d'analyse de ce dispositif se présente sous la forme d'une succession linéaire de pièces réalisées à partir de différents matériaux hydrophiles et poreux, découpées puis assemblées les unes aux autres pour former une bandelette. Selon un mode de réalisation particulier, de l'amont vers l'aval de la membrane d'analyse et adhérant sur la face collante d'une bande adhésive, sont agencés de façon successive et partiellement chevauchante :
- un élément formant zone de dépôt, apte à recevoir un échantillon liquide à analyser ; le matériau poreux constitutif de cet élément peut être un tissé ou un non tissé, en polyéthylène, polypropylène, cellulose, préférentiellement un papier filtre ;
- une bande de membrane en nitrocellulose :
   - sur la partie amont, se trouve un élément formant zone de stockage transitoire pour un anticorps marqué, dirigé contre la protéine MPB64 (un analyte indicateur de la présence de *Mycobacterium tuberculosis*) ; cet élément est réalisé dans un matériau non-tissé de composition à base de fibre de verre ;
   - un peu plus en aval, se trouve une zone de capture au niveau de laquelle, un anticorps dirigé contre cette même protéine MPB64 est immobilisé dans l'épaisseur même de la membrane de nitrocellulose ;
- un élément absorbant réalisé dans un matériau capable d'absorber rapidement un liquide.

Les membranes d'analyse composites, compte tenu de la fabrication indépendante et isolée de chacun des éléments constitutifs, de la fonctionnalisation éventuelle de ces éléments puis de l'assemblage de ceux-ci au reste du réseau hydrophile, se révèlent particulièrement complexes et coûteuses à industrialiser.

La présente invention a pour objectif de pallier les inconvénients rencontrés dans la conception et la fabrication des membranes d'analyse de dispositifs microfluidiques connues à ce jour. Plus particulièrement, elle vise à proposer des membranes d'analyse, de structure et de conception nouvelles, compatibles avec les contraintes d'une exploitation industrielle d'un dispositif de diagnostic à usage unique, notamment en termes de coût de production et de rentabilité.

A cet égard, la présente invention propose une membrane d'analyse de dispositif microfluidique réalisée d'un seul tenant en un matériau absorbant et diffuseur de liquide, de composition à base de fibre de verre. De manière classique, ladite membrane d'analyse comprend :
- au moins une zone dite zone de dépôt,
- au moins une zone dite zone de réaction,
- un ou plusieurs canaux assurant une communication fluidique entre zone(s) de dépôt et zone(s) de réaction.

Selon l'invention, cette membrane d'analyse comprend au moins une zone de réaction dans laquelle au moins un réactif se trouve adsorbé directement audit matériau absorbant et diffuseur de liquide, de composition à base de fibre de verre, ou indirectement grâce à un agent de couplage. Egalement, ladite au moins une zone de réaction est localisée dans un espace de la membrane d'analyse où la vitesse de diffusion des liquides est ralentie.

Avantageusement et selon l'invention, au moins une des deux faces de la membrane d'analyse est revêtue d'une couche de renfort mécanique en un matériau hydrophobe et imperméable, par exemple un film plastique de type poly(téréphtalate d'éthylène) ou PET.

Avant d'aller plus loin dans la description de l'invention, les définitions ci-après sont données afin de faciliter la compréhension et l'exposé de l'invention.

L'expression « membrane d'analyse » fait référence à l'élément principal d'un dispositif microfluidique à visée diagnostique qui, par ses différentes parties constitutives, assure la réception de l'échantillon liquide à analyser et l'acheminement d'au moins une partie des constituants de cet échantillon vers des zones d'analyse/détection, et fait office de structure-support à la mise en oeuvre de ces analyses/détections. Dans le cadre de la présente invention, ladite membrane d'analyse est définie comme étant réalisée d'un seul tenant, c'est-à-dire qu'elle est formée d'une pièce unique, continue et sans interruption, réalisée dans un matériau unique. Cela étant, il peut être envisagé d'adjoindre à une membrane d'analyse d'un seul tenant selon l'invention des éléments rapportés, de fonctionnalité(s) secondaire(s).

L'expression « matériau absorbant et diffuseur de liquide » fait référence à un textile poreux dont la structure consiste en un assemblage ordonné ou aléatoire de fibres (c'est-à-dire un tissé ou un non-tissé). Ce textile a la capacité non seulement d'absorber les liquides aqueux mais aussi de les diffuser à travers sa structure. Dans le cadre de la présente invention, le matériau absorbant et diffuseur de liquide utilisé dans la confection des membranes d'analyse est de composition à base de fibres de verre. A des fins de simplification du langage, pour désigner ce type de matériau, l'expression de « matériau en fibre de verre » peut être avantageusement utilisée dans la présente description. De tels matériaux en fibre de verre sont habituellement rencontrés dans les laboratoires d'analyses (aussi bien médicales que industrielles) où ils sont communément désignés comme « médias filtrant en fibre de verre » ou « filtres en fibre de verre », et sont classiquement appliqués au traitement de compositions liquides, à des fins de séparation et de purification. Leur fabrication consiste à former des feuilles/membranes avec des microfibres de verre agencées de manière plus ou moins aléatoire ou ordonnée, puis de les solidariser par voie chimique et/ou thermique et/ou mécanique. A titre d'exemples de tels matériaux, on peut citer notamment :
- les filtres WHATMAN™ (GE Healthcare Life Sciences, États-Unis), notamment les papiers MF1, LF1, VF1, VF2 et Fusion 5, destinés à la filtration du sang total et à la séparation cellules/plasma, et le filtre GF/C, destiné à la séparation de substances solides en suspension dans un fluide ;
- les filtres de la société SARTORIUS A.G. (Allemagne), notamment ceux destinés au traitement et à l'analyse de fluide.

Le terme de « réactif » est utilisé dans la présente description au sens large pour désigner toute substance utilisée en vue de mettre en oeuvre 1'(les) analyse(s)/détection(s) envisagée(s), que cette substance interagisse directement ou non avec la(les) cible(s) recherchée(s) ou n'intervienne qu'à titre auxiliaire. Ainsi, en l'absence de précision, les réactifs appliqués à la présente invention peuvent être, par exemple :
- dans le cas d'un test d'immunodétection : des anticorps (de capture et/ou de détection) et/ou des antigènes, des haptènes, des aptamères, éventuellement couplés à des marqueurs, des agents de couplage, des bras espaceurs, des adaptateurs...
- dans le cas d'un test de détection moléculaire : des sondes nucléiques et/ou des amorces nucléiques, marquées ou non, des enzymes (tels que des enzymes à activité polymérase, recombinase ou hélicase), des acides nucléiques marqués ou non, éventuellement des bras espaceurs, des adaptateurs...
- dans le cas d'un test direct de détection ionique, chimique ou biochimique : des réactifs chimiques, des enzymes et des substrats enzymatiques,
- dans le cas d'un test de détection microbiologique : des protéines, des anticorps, des bactériophages, des antibiotiques, des substrats enzymatiques...

Enfin, l'expression « espace où la vitesse de diffusion des liquides est ralentie » fait référence à une portion/partie/région particulière de la membrane d'analyse au niveau de laquelle le matériau en fibre de verre constitutif de ladite membrane a été localement modifié dans sa composition et/ou dans sa structure pour abaisser la vitesse de diffusion des liquides. Ainsi, par rapport à la vitesse de diffusion de ce même liquide dans le matériau en fibre de verre natif, cette vitesse de diffusion des liquides à travers cet espace est significativement plus faible. A des fins de simplification du langage, pour désigner un tel espace ménagé dans les membranes d'analyse selon l'invention, l'expression « espace à diffusion ralentie » peut être avantageusement utilisée dans la présente description. A l'intérieur de chaque espace à diffusion ralentie d'une membrane d'analyse selon l'invention, au moins une zone de réaction peut être identifiée. Les zones de réaction présentes dans un espace à diffusion ralentie d'une membrane d'analyse selon l'invention ont une surface généralement comprise entre 0,5 mm² et 25 mm², préférentiellement de l'ordre de 1-10 mm². Lorsqu'à partir de la forme générale des zones de réaction, une largeur et une longueur ou une base et une hauteur peuvent être définies, alors les largueurs et longueurs correspondantes ou les bases et les hauteurs correspondantes, sont d'un même ordre de grandeur, de préférence dans un rapport de 1 à 5.

A l'instar de Fang *et al.,* 2014, la présente invention a opté pour des membranes d'analyse d'un seul tenant et dont la structure est entièrement réalisée en un matériau en fibre de verre.

En créant dans une membrane d'analyse entièrement réalisée dans un matériau en fibre de verre des espaces à diffusion ralentie pour les liquides et en implantant des zones de réaction précisément dans ces espaces, les inventeurs sont parvenus à pallier nombre de problèmes et difficultés rencontrés avec les membranes proposées par Fang *et al.*, 2014.

En premier lieu, le problème de diffusion d'un réactif hors de la zone de réaction qui lui est associée, et celui de la contamination par ce réactif d'autres zones de réaction au voisinage, ont été résolus. Avec des espaces à diffusion ralentie, l'invention a permis le confinement de chaque réactif dans la zone de réaction qui lui est associée, offrant ainsi un meilleur contrôle de la concentration/quantité de réactifs finalement adsorbés dans les zones de réaction et limitant le risque de contamination des zones de réaction au voisinage. Pour fonctionnaliser les zones de réaction, chaque réactif en solution dans un tampon d'adsorption *ad' hoc* est déposé dans sa zone de réaction où il se trouve retenu suffisamment longtemps pour pouvoir s'y adsorber. Un séchage forcé (non passif, par exemple par un traitement thermique et/ou par ventilation) permet de limiter encore davantage la dispersion des réactifs hors des zones de réaction.

En deuxième lieu, lorsque les zones de réaction sont localisées dans les espaces à diffusion ralentie selon l'invention et qu'elles sont traversantes, c'est-à-dire qu'elles sont ouvertes sur le reste du réseau hydrophile par au moins deux ouvertures qui permettent une entrée d'un liquide à tester et une évacuation de celui-ci, les espaces à diffusion ralentie permettent avantageusement d'augmenter le temps de contact entre ce liquide et les réactifs présents dans chaque zone de réaction. L'amélioration de la qualité des réactions apportée par les espaces à diffusion ralentie selon l'invention est d'autant plus appréciable pour les analyses requérant un traitement séquentiel de l'échantillon liquide ; les zones de réaction dédiées à une telle analyse sont disposées en série, chacune des zones de réaction étant spécifiquement fonctionnalisée pour pouvoir réaliser une étape particulière du procédé d'analyse.

Enfin, de par sa conception, une membrane d'analyse selon l'invention impose aux liquides à analyser de grandes variations de vitesse dans leur diffusion. Ces grandes variations de vitesse de diffusion forment, juste en amont des espaces à diffusion ralentie, un goulot d'étranglement au niveau duquel le liquide à analyser s'accumule. Cette accumulation temporaire permet de réduire la surface de liquide exposée aux échanges gazeux et, par conséquent, de ralentir significativement l'assèchement du liquide à tester.

Avantageusement et selon l'invention, au niveau des espaces à diffusion ralentie, le matériau en fibre de verre présente une hydrophilie et/ou une densité de flux réduites.

Dans un premier mode de réalisation des espaces à diffusion ralentie d'une membrane d'analyse selon l'invention, le matériau en fibre de verre, dans cette partie particulière de la membrane d'analyse, présente des incrustations de cire solide.

Compte tenu de la grande fragilité structurelle qui caractérise les matériaux en fibre de verre et de leur épaisseur relativement importante (généralement comprise entre 200 et 1000 µm), les inventeurs ont appliqué une technique particulière d'imprégnation à la cire pour créer de telles incrustations de cire solide dans l'épaisseur d'une feuille en fibre de verre.

Cette technique particulière est décrite en détail dans la demande de brevet européen n° EP16163217.9, déposée par la Demanderesse en date du 31/03/2016. Selon un mode opératoire préféré, on procède schématiquement de la façon suivante :
- sur un film de transfert, sont imprimés en encre solide de composition comprenant de la cire :
   - un premier motif intermédiaire destiné à revêtir la face inférieure d'une feuille en fibre de verre qui constituera la structure de base de la membrane d'analyse ; ce premier motif intermédiaire est à l'image de l'espace à diffusion ralentie à réaliser ;
   - un second motif intermédiaire destiné à revêtir la face supérieure de la feuille en fibre de verre ; celui-ci est une image inversée du premier motif intermédiaire ;
   - les premier et second motifs intermédiaires peuvent être imprimés sur un seul et même film de transfert ou sur deux films de transfert indépendants ;
- ces motifs intermédiaires (avec leur film de transfert) sont apposés directement au contact des deux faces de la feuille en fibre de verre de sorte que, de part et d'autre de l'épaisseur de cette feuille de fibre de verre, ils se retrouvent mutuellement symétriques, au moins sensiblement en regard l'un de l'autre ;
- maintenue au moins sensiblement à l'horizontale, ladite feuille en fibre de verre et le(s)dit(s) film(s) de transfert sont soumis à un traitement thermique apte à provoquer une fusion au moins partielle de la cire constitutive des motifs intermédiaires, et à un traitement mécanique apte à comprimer momentanément l'épaisseur de tout ou partie de ladite feuille en fibre de verre ;
- ladite feuille en fibre de verre est soumise à une phase de détente mécanique et thermique, apte à permettre à ladite feuille de reprendre au moins en partie son épaisseur initiale et à la cire de se resolidifier à l'intérieur de l'épaisseur de ladite feuille en fibre de verre.

Pour que les incrustations de cire ainsi réalisées puissent ralentir le flux des liquides à analyser sans en bloquer le passage, l'impression des motifs intermédiaires est réalisée avec une encre solide faiblement concentrée en cire et/ou dans une couleur pâle (faiblement intense). L'intensité de la couleur imprimée est proportionnelle à la quantité de cire déposée sur le film de transfert ; cette intensité de couleur est choisie pour que, une fois dans l'épaisseur de la feuille de fibre de verre, la quantité de cire ainsi transférée soit insuffisante pour bloquer complètement le passage des liquides par capillarité mais juste suffisante pour abaisser de façon significative la vitesse de ce passage.

A titre indicatif, cette impression de cire est mise en oeuvre à l'aide d'une imprimante de type XEROX^{®} ColorQube™, alimentée avec des encres solides de références XEROX^{®} 108R00931 (couleur cyan), 108R00932 (couleur magenta), 108R00933 (couleur jaune) et 108R00934/108R00935 (couleur noire).

Dans un deuxième mode de réalisation des espaces à diffusion ralentie d'une membrane d'analyse selon l'invention, précisément dans les régions particulières de la membrane d'analyse correspondant aux espaces à diffusion ralentie, des micro-canaux sont façonnés dans le matériau en fibre de verre ; ces micro-canaux canalisent le flux des liquides qui traversent ledit espace. La section moyenne de ces micro-canaux est avantageusement comprise entre 10000 µm² et 200000 µm², préférentiellement entre 25 000 µm² et 150000 µm², et plus préférentiellement encore entre 30 000 µm² et 55 000 µm².

Lorsqu'un média filtrant Whatman™ MF1 est utilisé pour confectionner une membrane d'analyse selon l'invention, les micro-canaux des espaces à diffusion ralentie ont avantageusement une largeur comprise entre 80 µm et 200 µm, préférentiellement de l'ordre de 150 µm

Quel que soit le mode de réalisation des espaces à diffusion ralentie, que ce soit par incrustation de cire solide ou par la mise en place de micro-canaux, une membrane d'analyse selon l'invention comprend avantageusement, localisées dans un espace à diffusion ralentie, au moins deux zones de réaction. Ces zones de réaction sont disposées en communication fluidique directe, les unes derrières les autres.

Selon une variante de réalisation de l'invention, les zones de réaction d'un même espace à diffusion ralentie sont disposées en communication fluidique indirecte, les unes derrière les autres et entre lesquelles se trouve intercalée au moins une zone tampon. Ladite au moins une zone tampon n'est pas fonctionnalisée. Le matériau en fibre de verre, à ce niveau n'a subi aucun traitement, aucune modification ni dans sa structure ni dans sa composition. A l'instar des zones de réaction, les zones tampon d'un espace à diffusion ralentie d'une membrane d'analyse selon l'invention ont une surface généralement comprise entre 0,5 mm² et 25 mm², préférentiellement de l'ordre de 1-10 mm². Lorsqu'à partir de la forme générale desdites zones tampon, une largeur et une longueur ou une base et une hauteur peuvent être définies, alors les largueurs et longueurs correspondantes ou les bases les hauteurs correspondantes, sont d'un même ordre de grandeur, généralement dans un rapport de 1 à 5.

Avantageusement, dans les espaces à diffusion ralentie d'une membrane d'analyse selon l'invention, la distance entre deux zones adjacentes, zones de réaction et/ou zones tampon, est inférieure 15 mm, préférentiellement inférieure à 5 mm, et plus préférentiellement encore est de l'ordre de 1-2 mm.

Ce faisant, les différentes zones de réaction peuvent être fonctionnalisées de façon concomitante avec un risque minimal de contamination d'une zone de réaction à une autre, et une bonne maîtrise de la quantité de réactifs chargés dans chaque zone de réaction.

Avantageusement, un espace à diffusion ralentie d'une membrane d'analyse selon l'invention comprend au moins deux zones de réaction placées en communication fluidique directe, l'une derrière l'autre et à une distance inférieure à 5 mm, préférentiellement à une distance de l'ordre de 1-2 mm.

Une membrane d'analyse selon l'invention peut être de forme pleine. A cet effet, sur la base d'une feuille de fibre de verre (éventuellement préalablement découpée à la forme et aux dimensions finales de la membrane d'analyse), le contour des différentes zones de dépôt, de réaction et des canaux assurant la communication fluidique est avantageusement tracé à la cire solide. La cire solide implantée à travers l'épaisseur de la feuille en fibre de verre forme des barrières étanches aux liquides. Egalement à cet effet, les espaces à diffusion ralentie intègrent avantageusement des incrustations de cire solide. La demande de brevet européen n° EP16163217.9 (bioMérieux) enseigne une méthode de réalisation d'une telle membrane d'analyse de forme pleine.

Une membrane d'analyse selon l'invention peut aussi être de forme élaguée. A cet effet, ladite membrane d'analyse est découpée dans une feuille de matériau en fibre de verre préalablement revêtue d'une couche de renfort mécanique sur une de ses faces, en suivant le contour extérieur du réseau hydrophile que forment les différentes zones de dépôt, de réaction, les canaux de conduction fluidique et les espaces à diffusion ralentie.

Enfin, une membrane d'analyse selon l'invention peut aussi être de forme mixte. A cet effet, elle est façonnée dans une feuille de matériau en fibre de verre dont une des faces, dite face inférieure, est préalablement revêtue d'une couche de renfort mécanique et le contour du réseau hydrophile que forment les zones de dépôt et de réaction, les canaux de conduction fluidique et les micro-canaux des espaces à diffusion ralentie est gravé dans la masse du matériau en fibre de verre jusqu'à atteindre la surface de la couche de renfort mécanique.

La présente invention concerne également une membrane d'analyse de dispositif microfluidique ainsi qu'un dispositif microfluidique comprenant une telle membrane d'analyse caractérisés, en combinaison, par tout ou partie des caractéristiques ci-dessus ou ci-après.

D'autres buts, caractéristiques et avantages de l'invention apparaîtront à la lecture des exemples suivants qui se réfèrent aux figures annexées et dans lesquelles :
- la Figure 1 est une représentation schématisée d'un procédé d'imprégnation à la cire permettant de façonner une membrane d'analyse conforme à un premier mode de réalisation ; dans ce premier mode de réalisation, la membrane d'analyse est dite de forme pleine et les espaces à diffusion ralentie sont créés par incrustation de cire ;
- la Figure 2 expose en (A), une représentation schématique d'un film de transfert utilisé dans le procédé d'imprégnation à la cire illustré dans la figure précédente, et en (B), une photographie d'une membrane d'analyse de forme pleine obtenue à partir de ce film de transfert ;
- les Figure 3, Figure 4A et Figure 4B sont des photographies illustrant la mise en application d'une membrane d'analyse de forme pleine selon l'invention, à des fins d'immunodétection ;
- la Figure 5 est une photographie d'une membrane d'analyse selon l'invention façonnée pour le dépistage du virus de la dengue, par une codétection des protéines NS1 et DomIII ;
- la Figure 6 présente des photographies de médias filtrants gravés au laser CO₂ et illustrant l'influence de la largeur des traits de gravure sur l'étanchéité des motifs ;
- la Figure 7 expose une représentation graphique (A) et une photographie (B) illustrant l'influence de la largeur des micro-canaux sur la distance d'écoulement des liquides à travers un espace à diffusion ralentie ménagé dans un média filtrant en fibre de verre ;
- la Figure 8 est une représentation graphique montrant la corrélation entre la largeur des micro-canaux sur la distance d'écoulement des liquides à travers un espace à diffusion ralentie ménagé dans un média filtrant en fibre de verre ;
- la Figure 9 est une représentation photographique d'une membrane d'analyse selon l'invention, façonnée par ablation/gravure laser, avec agrandissement des espaces à diffusion ralentie ;
- la Figure 10 est une représentation graphique illustrant un exemple de membrane d'analyse selon l'invention, façonnée par ablation de matière hydrophile et fonctionnalisée en vue d'une détection moléculaire de séquences nucléiques cibles ;
- la Figure 11 montre trois photographies exposant les résultats d'une détection moléculaire d'une séquence nucléique cible, au moyen d'une membrane d'analyse selon l'invention.

### EXEMPLES

### I. Fabrication d'une membrane d'analyse de forme pleine selon l'invention, par imprégnation à la cire solide

### a) Mise en oeuvre du précédé d'imprégnation à la cire, objet de la demande de brevet européen n° EP16163217.9

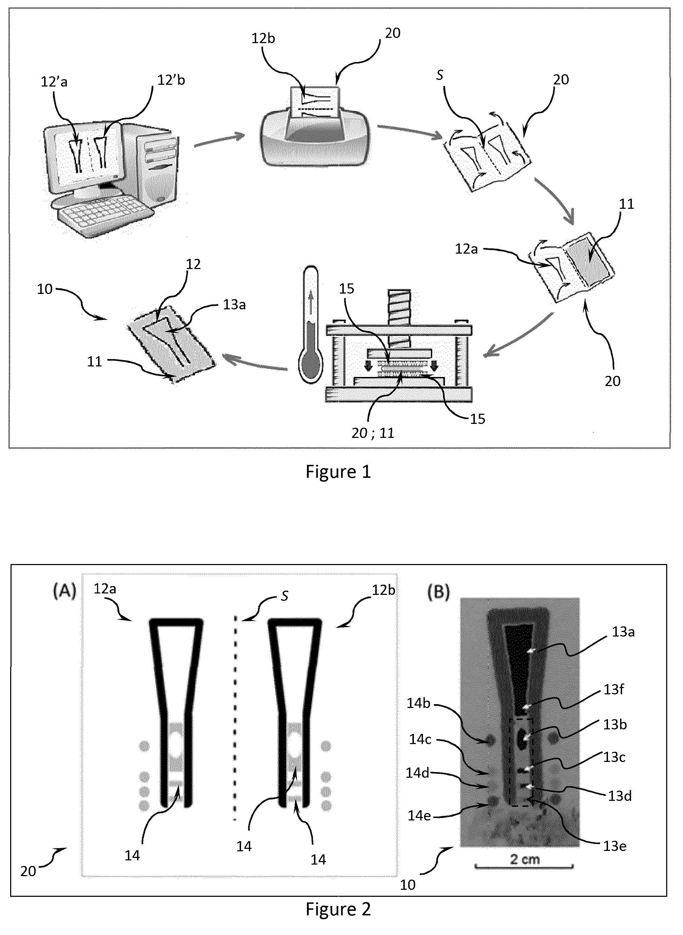

La Figure 1 illustre de façon schématique la mise en oeuvre d'un procédé de fabrication d'une membrane d'analyse 10, conforme à un premier mode de réalisation de l'invention selon lequel la membrane d'analyse est de forme pleine et les espaces à diffusion ralentie sont obtenus par incrustation de cire.

Dans une première étape, on crée, par informatique et au moyen d'un logiciel de dessin, une image 12'a correspondant au motif à intégrer dans l'épaisseur d'une feuille en fibre de verre 11. Cette première image 12'a est dupliquée en une image symétrique 12'b.

Au moyen d'une imprimante à encre solide, les deux images 12'a et 12'b sont imprimées sur un film de transfert 20, de façon à former deux motifs intermédiaires 12a et 12b disposés symétriquement par rapport à un axe S. Cet axe de symétrie S est également imprimé sur le film de transfert 20, en guise de repère visuel. La Figure 2(A) illustre de façon détaillée un tel film de transfert 20 sur lequel sont imprimés les deux motifs intermédiaires 12'a et 12'b.

Une fois cette impression réalisée, le film de transfert 20 est plié en deux en suivant l'axe de symétrie S, les motifs intermédiaires 12a et 12b tournés vers l'intérieur. Ces derniers se retrouvent ainsi superposés l'un sur l'autre. Une feuille en fibre de verre 11 est glissée à l'intérieur du film de transfert 20 replié, intercalé entre les deux motifs intermédiaires 12a et 12b.

La feuille en fibre de verre 11, prise en sandwich entre les deux volets du film de transfert 20, est alors mise sous presse entre deux plaques de compression chauffantes, horizontales et deux pièces en caoutchouc 15 formant tampon thermique et mécanique.

L'ensemble est soumis à une pression de l'ordre de 1 kg/cm² et à une température de 120°C, pendant environ 3 minutes. Lors de ce processus, la cire préalablement imprimée sur le film de transfert 20 est transférée sur les deux faces de la feuille en fibre de verre 11, puis en imprègne l'épaisseur.

L'impression est réalisée avec une imprimante de type XEROX^{®} ColorQube™, alimentée avec des encres solides de références XEROX^{®} 108R00931 (couleur cyan), 108R00932 (couleur magenta), 108R00933 (couleur jaune) et 108R00934/108R00935 (couleur noire). Le film de transfert 20 est une feuille de papier bureautique ordinaire.

Comme illustré à la Figure 2(A), les motifs intermédiaires 12a et 12b imprimés sur le film de transfert 20, de forme générale rectiligne, présentent une partie supérieure évasée et une partie basse plus étroite à extrémité ouverte. Leurs contours extérieurs sont imprimés à l'encre noire avec une intensité de coloration élevée. Ce faisant, la quantité de cire correspondante s'est avérée suffisante pour permettre la réalisation et l'obtention de bordures imperméables dans l'épaisseur de la feuille en fibre de verre.

La partie supérieure des motifs intermédiaires 12a et 12b est évasée et est destinée à former une zone hydrophile, en l'occurrence une zone de dépôt 13a apte à recevoir un échantillon liquide à analyser. Une fois déposé dans la zone de dépôt 13a, l'échantillon liquide va pouvoir migrer par capillarité en direction des autres zones hydrophiles du dispositif, à savoir vers la partie basse où sont localisées les zones de réaction. La Figure 2(B) est une photographie d'une membrane d'analyse 10 préparée à partir du film de transfert 20 (après une fonctionnalisation particulière des zones de réaction et après utilisation).

Cette partie basse du motif correspond à un espace à diffusion ralentie selon l'invention. Cet espace, repéré sur la Figure 2(B) par un cadre au contour discontinu, est obtenu par transfert et imprégnation d'une couche d'encre solide 14 de couleur pâle (faiblement intense) appliquée sur les deux faces de feuille en fibre de verre 11. L'intensité de la couleur à appliquer est déterminée pour réduire l'hydrophilie du matériau en fibre de verre sans bloquer le passage des liquides.

A l'intérieur de cet espace à diffusion ralentie, sont localisées quatre zones de réaction 13b, 13c, 13d et 13e, épargnées par l'imprégnation à la cire. La position de chacune de ces zones d'intérêt est spécifiquement repérée par les éléments de marquage 14b, 14c, 14d et 14e, également tracée à l'encre solide colorée.

Une fois les cires transférées dans l'épaisseur de la feuille en fibre de verre 11, les différentes zones plus ou moins hydrophiles vont pouvoir être fonctionnalisées et/ou chargées en réactifs en fonction des analyses et tests souhaités.

### b) Exemples de fonctionnalisation de la membrane d'analyse 10

### 1. Fonctionnalisation pour le dépistage de l'hépatite B

Selon un premier mode de mise en application de la membrane d'analyse 10 précédemment décrite, celle-ci a été fonctionnalisée pour le dépistage de l'hépatite B, par immunodétection de l'antigène HBs contenu dans le sang.

Dans ce contexte, des fonctions particulières ont été affectées aux zones d'intérêt 13b, 13c, 13d et 13e.

La zone 13d est fonctionnalisée au moyen d'anticorps monoclonaux anti-HBs, spécifiques de la réaction; la zone 13d forme le «spot test ». La zone 13e est fonctionnalisée au moyen d'anticorps monoclonaux anti-alcaline phosphatase, spécifiques du conjugué de détection ; la zone 13e forme le «spot contrôle positif». La zone 13c est fonctionnalisée au moyen d'anticorps non-spécifiques de la réaction (par exemple, des anticorps anti-rat) ; la zone 13c forme le « spot contrôle négatif ».

La fonctionnalisation de ces différentes zones par les anticorps est réalisée par adsorption des anticorps.

Au-dessus de ces trois spots, la zone 13b est dédiée au stockage de la seconde partie du complexe conjugué (anticorps monoclonaux anti-HBs marqués par la biotine) ; la zone 13b forme le « spot Ac anti-HBs-biot ».

Eventuellement, la zone de dépôt 13a peut également servir au stockage du conjugué de la réaction immuno-enzymatique (streptavidine-alcaline phosphatase ou STRE-PAL) sous forme séchée. Ce conjugué sera resolubilisé par la phase liquide de l'échantillon à analyser.

### 2. Fonctionnalisation pour le dépistage du virus de la dengue

Selon un deuxième mode de mise en application de la membrane d'analyse 10 précédemment décrite, celle-ci a été fonctionnalisée pour la détection, dans le sang et le plasma, de deux protéines du virus de la dengue : la protéine NS1 et le domaine III de la protéine d'enveloppe du virus (DomIII).

Pour la détection de la protéine NS1, les dépôts suivants ont été réalisés :
- zone 13e (zone contrôle anti-PAL) : 0,35 µL d'un anticorps anti-phosphatase alcaline 1 mg/mL en PBS,
- zone 13c (zone de test) : 0,35 µL d'un anticorps anti-NS1 à 1 mg/mL en PBS,
- zone 13b : 1 µL d'une solution d'anticorps anti-NS1 marqués à la phosphatase alcaline à la concentration de 50 µg/mL en PBS-BSA 0,5 %,
- zone 13d (zone de contrôle négatif) : 0,35 µL de PBS-BSA 0,5 %.
Une fois les dépôts effectués, la membrane d'analyse est mise à sécher 3 minutes à 60°C. Elle est alors prête à être utilisée.

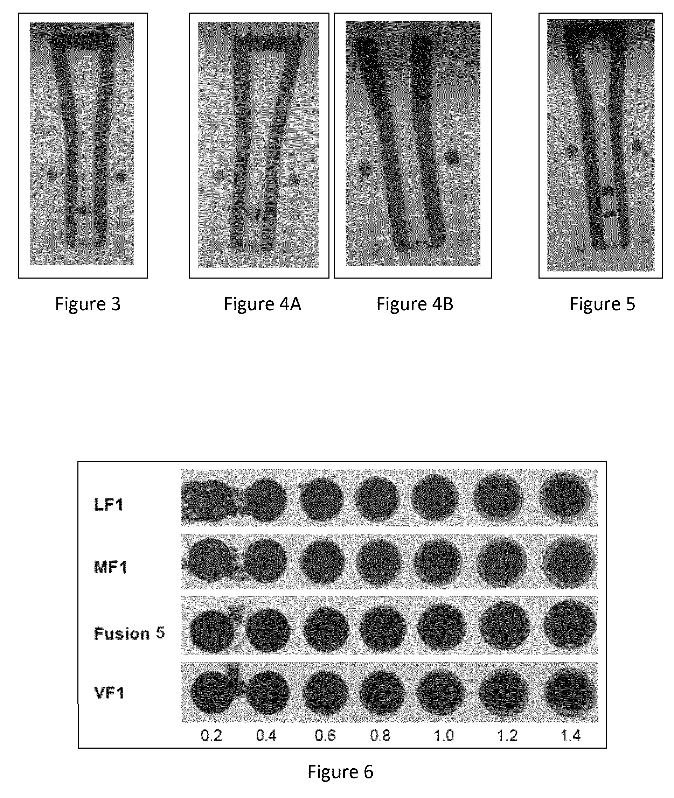

Pour tester cette membrane d'analyse, 20-25 µL de plasma additionnés de 1 µg de protéine NS1 sont déposés dans la zone réservoir 13a. Une fois que la totalité de l'échantillon a pénétré et migré à l'intérieur de la membrane d'analyse, 10µL de BCIP/NTP (*bromo-4-chloro-3-indol phosphate*/*4-nitroblue tetrazolium chloride*) sont rajoutés dans la zone 13b. Très rapidement, la zone contrôle anti-PAL et la zone de test deviennent positives, la zone de contrôle négatif restant incolore (cf. Figure 3). La détection est réalisée en 5-6 minutes. En parallèle, l'expérience est réalisée avec 20-25 µL de plasma sans NS1. Dans ce cas, seule la zone contrôle devient positive.

De façon similaire, la membrane d'analyse 10 précédemment décrite, a été fonctionnalisée pour la détection de la protéine de l'enveloppe du virus de la dengue, en utilisant des anticorps de capture et de détection dirigés contre DomIII. La membrane d'analyse correspondante a été testée. Une détection positive de DomIII et une détection négative sont illustrées par les Figure 4A et Figure 4B, respectivement.

Enfin, la codétection des protéines NS1 et DomIII a également été mise en oeuvre avec succès au moyen d'une membrane d'analyse (multiplexage) dont la structure et la conception sont très similaires à celles des membranes d'analyse 10 précédentes. La différence repose sur la présence d'une zone de réaction supplémentaire au niveau de l'espace à diffusion ralentie. Une photographie de cette nouvelle membrane d'analyse selon l'invention est présentée sur la Figure 5.

### II. Fabrication d'une membrane d'analyse de forme mixte selon l'invention, par une technique d'ablation au laser CO₂

### a) Détermination de l'épaisseur des bordures des motifs à graver dans un matériau en fibre de verre pour obtenir une bonne étanchéité

Des tests d'ablation au laser CO₂ (plateforme Speedy 100, de la compagnie TROTEC^{®}, Autriche) ont été réalisés sur différents matériaux en fibre de verre du type média filtrant en vue de déterminer l'épaisseur des bordures à appliquer aux motifs des membranes d'analyse selon l'invention.

A cet effet, pour chacun des médias filtrants testés, la face inférieure a été préalablement recouverte d'une couche de renfort mécanique, imperméable aux liquides, en l'occurrence un film adhésif en poly(téréphtalate d'éthylène). Sur la face supérieure, une série de sept motifs circulaires a été gravée au laser avec une profondeur de gravure suffisante pour atteindre la couche de renfort mécanique. Les cercles gravés présentent un même diamètre intérieur de 10 mm, alors que leurs bords gravés sont d'épaisseurs variables, allant de 0,2 mm à 1,4 mm, par bonds de 0,2 mm. Une goutte de colorant est déposée au centre des motifs afin de vérifier leur étanchéité.

Le Tableau 1, ci-après, présente les caractéristiques des médias filtrants testés ainsi que les paramètres de fonctionnement appliqués au laser CO₂ utilisé.

**Tableau 1**

| | LF1 (GE Healthcare Life Sciences) | MF1 (GE Healthcare Life Sciences) | Fusion 5 (GE Healthcare Life Sciences) | VF2 (GE Healthcare Life Sciences) |
|---|---|---|---|---|
| Épaisseur du média (µm) | 247 | 367 | 370 | 785 |
| Puissance du laser (W) | 30 | 30 | 30 | 30 |
| Vitesse de déplacement du laser (m.s⁻¹) | 3,55 | 3,55 | 1,42 | 1,42 |

Les résultats obtenus sont présentés à la Figure 6, sous la forme de photographies des média filtrants gravés.

Quel que soit le média filtrant utilisé, il est possible de générer des motifs étanches grâce au procédé de gravure par laser. Il convient d'optimiser pour chaque média en fibre de verre, en fonction notamment de la densité de fibres et de l'épaisseur du matériau, la puissance et la vitesse de déplacement du laser, ainsi que la largeur des traits gravés.

### b) Détermination de l'influence de la largeur des micro-canaux sur la distance d'écoulement des liquides

Des tests d'ablation au laser CO₂ ont été réalisés sur un média filtrant en fibre de verre de type Whatman™ MF1 en vue de déterminer l'influence de la largeur des micro-canaux d'un espace à diffusion ralentie selon l'invention sur la distance d'écoulement des liquides.

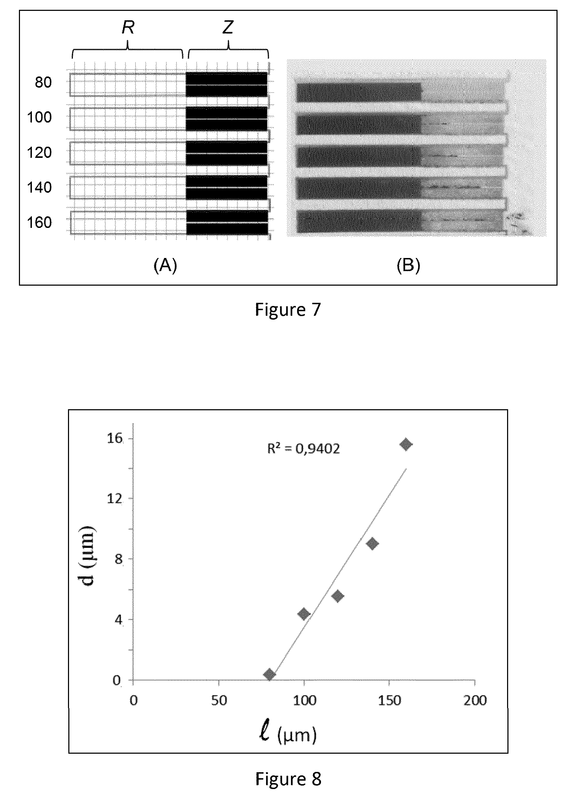

En référence à la Figure 7, une série de motifs comprenant un réservoir R lié à une zone de diffusion ralentie Z, comprenant un micro-canal de largeur variable d'un motif à l'autre, ont été gravés par laser CO₂. Les largeurs testées sont 80, 100, 120, 140 et 160 µm Un volume constant de colorant (20 µl) est ensuite déposé dans la zone réservoir. La distance parcourue par le colorant dans le canal est mesurée dans chacun des cas. Les résultats sont présentés sous forme numérique dans Tableau 2 ci-après et sous forme graphique à la Figure 8.

**Tableau 2**

| Largeur du micro-canal (µm) | Distance parcourue (mm) |
|---|---|
| 80 | 0,4 |
| 100 | 4,4 |
| 120 | 5,5 |
| 140 | 9,0 |
| 160 | 15,6 |

La distance (d) parcourue par le colorant dans les micro-canaux est proportionnelle à la largeur (ℓ) de ceux-ci. Il est ainsi possible de contrôler l'acheminement des liquides grâce à la méthode de gravure laser décrite ici. Par ailleurs, la mise en oeuvre d'une telle analyse permet, pour un matériau en fibre de verre donné, d'évaluer la largeur des micro-canaux et la distance entre deux zones de réaction/tampon à appliquer à un espace à diffusion ralentie d'une membrane d'analyse selon l'invention.

### III. Un exemple de membrane d'analyse façonnée par ablation/gravure laser

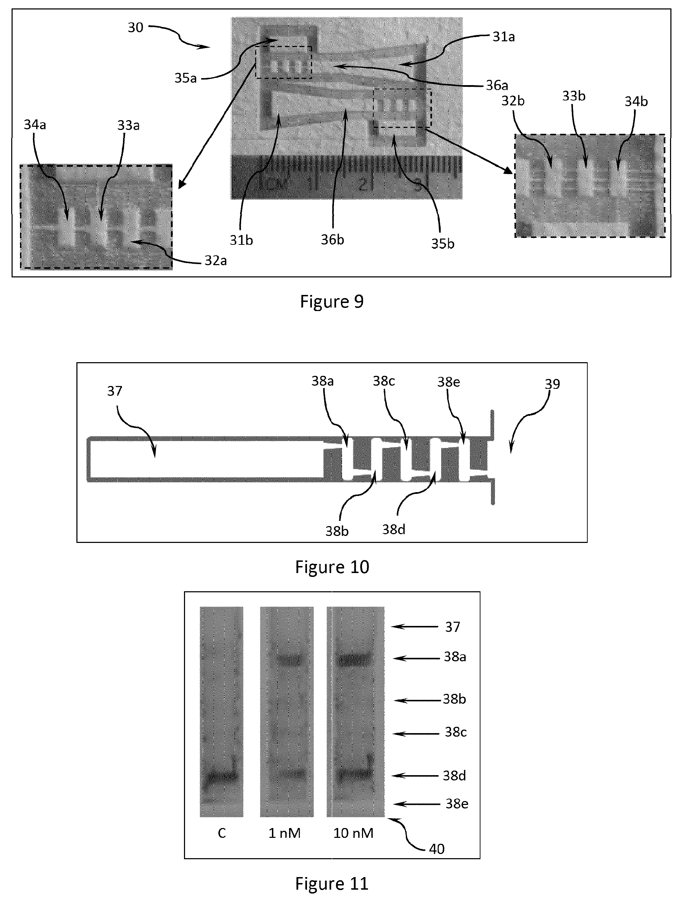

Tel que le montre la Figure 9, la membrane d'analyse 30 exemplifiée comporte deux réseaux hydrophiles d'analyse disposés tête-bêche, chaque réseau hydrophile comportant :
- une zone de dépôt de l'échantillon 31a ou 31b,
- un espace à diffusion ralentie abritant trois zones de réaction traversantes 32a ou 32b, 33a ou 33b, et 34a ou 34b, alignées les unes derrière les autres ; la distance entre deux zones de réaction adjacentes est de l'ordre de 1 mm.
- une zone de dépôt secondaire ou de stockage annexe, 35a ou 35b, placée en communication fluidique directe avec la zone de réaction 33a ou 34b, à travers un micro-canal.

Dans l'espace à diffusion ralentie du réseau hydrophile du haut, chaque zone de réaction est en communication fluidique directe avec la zone de réaction adjacente, à travers un micro-canal unique de forme conique.

Dans l'espace à diffusion ralentie du réseau hydrophile du bas, chaque zone de réaction est en communication fluidique directe avec la zone de réaction adjacente, à travers trois micro-canaux parallèles et de forme générale rectiligne.

### IV. Un exemple de détection moléculaire de séquences nucléiques cibles sur une membrane d'analyse selon l'invention façonnée par ablation/gravure laser

La Figure 10 montre un motif de gravure selon une configuration particulière d'une membrane d'analyse 40 selon l'invention, façonnée dans un matériau en fibre de verre de type Whatman™ MF1, en vue d'une détection de séquences nucléiques cibles.

La membrane d'analyse 40 correspondante comprend, en amont, une zone 37 mixte, en ce sens qu'elle sert, d'une part, à stocker au préalable les réactifs secs et, d'autre part, à recevoir les réactifs liquides (échantillon et substrat enzymatique) lors de l'analyse. En aval, se trouve un espace à diffusion ralentie au sein duquel se trouve localisée une série de zones de réaction 38a-38d, positionnées comme des barreaux d'échelle et reliées entre elles par des micro-canaux. Ces micro-canaux ont une forme biseautée, avec une largeur maximale de l'ordre de 300 µm La troisième zone 39, en sortie de l'espace à diffusion ralentie, sert de pompe capillaire pour l'écoulement des liquides.

Dans ce modèle particulier de membrane d'analyse, le canal qui assure la communication fluidique entre la zone 37 et les zones de réaction de l'espace à diffusion ralentie, se confond structurellement avec une partie de la zone 37 et en constitue un prolongement jusqu'audit espace à diffusion ralentie.

La zone 37 est fonctionnalisée par séchage des réactifs de détection suivants, dans un tampon qui permet leur redissolution aisée par l'échantillon : i) des oligonucléotides, spécifiques de la cible ADN simple brin à détecter, marqués par la biotine ii) des oligonucléotides, spécifiques d'une autre partie de la séquence de la cible ADN, marqués par la horseradish peroxidase et iii) de la streptavidine marquée par la phosphatase alcaline.

Les zones de réaction 38a-38e servent à la capture spécifique et à la révélation de la présence de la cible ADN. La première zone de réaction 38a est fonctionnalisée par adsorption d'anticorps monoclonaux orientés contre la horseradish peroxidase (test spécifique). Les trois zones de réaction suivantes 38b, 38c et 38d sont fonctionnalisées par adsorption de la BSA. Elles servent ici de contrôle négatif mais pourraient aussi permettre des détections multiplexées. La dernière zone de réaction 38e est fonctionnalisée par adsorption de la BSA-biotine (contrôle positif).

A l'issue de la réaction, on observe une coloration de la bande de test spécifique dont l'intensité est fonction de la concentration en cible ADN dans l'échantillon.

La Figure 11 illustre les résultats d'une détection utilisant une telle membrane d'analyse. De gauche à droite, les concentrations en séquences nucléiques cibles sont de 0 (contrôle négatif), 1 nM et 10 nM.

## Revendications

1. Membrane d'analyse (10; 30; 40) de dispositif microfluidique réalisée d'un seul tenant en un matériau absorbant et diffuseur de liquide, de composition à base de fibre de verre, ladite membrane d'analyse (10 ; 30 ; 40) comprenant :
- au moins une zone dite zone de dépôt (13a; 31a, 31b ; 37),
- au moins une zone dite zone de réaction (13b, 13c, 13d, 13e ; 32a, 33a, 34a, 32b, 33b, 34b ; 38a, 38b, 38c, 38d, 38e),
- un ou plusieurs canaux (13f; 36a, 36b) assurant une communication fluidique entre zone(s) de dépôt et zone(s) de réaction,
**caractérisée en ce qu'**elle comprend au moins une zone de réaction (13b, 13c, 13d, 13e ; 32a, 33a, 34a, 32b, 33b, 34b ; 38a, 38b, 38c, 38d, 38e) dans laquelle au moins un réactif se trouve adsorbé directement audit matériau diffuseur de liquide en fibre de verre, ou indirectement grâce à un agent de couplage, et **en ce que** ladite au moins une zone de réaction (13b, 13c, 13d, 13e ; 32a, 33a, 34a, 32b, 33b, 34b ; 38a, 38b, 38c, 38d, 38e) est localisée dans un espace de la membrane d'analyse où la vitesse de diffusion des liquides est ralentie.

2. Membrane d'analyse selon la revendication 1, **caractérisée en ce que**, au moins une de ses deux faces est revêtue d'une couche de renfort mécanique en matériau hydrophobe et imperméable.

3. Membrane d'analyse selon la revendication 1 ou 2, **caractérisée en ce que**, dans l'espace où la vitesse de diffusion des liquides est ralentie, le matériau en fibre de verre présente une hydrophilie et/ou une densité de flux réduites.

4. Membrane d'analyse selon la revendication 3, **caractérisée en ce que**, dans l'espace où la vitesse de diffusion des liquides est ralentie, le matériau en fibre de verre présente des incrustations solides réalisées à la cire.

5. Membrane d'analyse selon la revendication 3, **caractérisée en ce que**, dans l'espace où la vitesse de diffusion des liquides est ralentie, des micro-canaux façonnés dans un matériau en fibre de verre canalisent le flux des liquides traversant ledit espace.

6. Membrane d'analyse selon la revendication 5, **caractérisée en ce que** lesdits micro-canaux ont une section moyenne est avantageusement comprise entre 10000 µm² et 200000 µm².

7. Membrane d'analyse selon la revendication 5 ou 6, **caractérisée en ce qu'**elle est confectionnée à partir d'un média filtrant Whatman™ MF1 et **en ce que** lesdits micro-canaux ont une largeur comprise entre 80 µm et 200 µm.

8. Membrane d'analyse selon la revendication 7, **caractérisée** en ce lesdits micro-canaux ont une largeur de l'ordre de 150 µm.

9. Membrane d'analyse selon l'une quelconque des revendications 1 à 8, **caractérisée en ce qu'**elle comprend, dans un espace de la membrane d'analyse où la vitesse de diffusion des liquides est ralentie, au moins deux zones de réaction (13b, 13c, 13d, 13e ; 32a, 33a, 34a, 32b, 33b, 34b ; 38a, 38b, 38c, 38d, 38e) placées en communication fluidique directe, l'une derrière l'autre et à une distance inférieure à 5 mm.

10. Membrane d'analyse selon l'une quelconque des revendications 1 à 8, **caractérisée en ce qu'**elle comprend, dans un espace de la membrane d'analyse où la vitesse de diffusion des liquides est ralentie, au moins deux zones de réaction placées en communication fluidique indirecte, les unes derrière les autres et entre lesquelles se trouve intercalée au moins une zone tampon.

11. Membrane d'analyse selon la revendication 9 ou 10, **caractérisée en ce que** la distance entre deux zones adjacentes, zones de réaction et/ou zones tampon, est inférieure 15 mm.

12. Membrane d'analyse (10) selon l'une quelconque des revendications 1 à 11, **caractérisée en ce qu'**elle présente une forme dite pleine, dans laquelle le contour desdites zones de dépôt, de réaction et desdits canaux assurant la communication fluidique est tracé à la cire solide.

13. Membrane d'analyse selon l'une quelconque des revendications 1 à 11, **caractérisée en ce qu'**elle présente une forme dite élaguée ; ladite membrane d'analyse étant découpée dans une feuille de matériau en fibre de verre en suivant le contour extérieur du réseau formé par les différentes zones de dépôt, de réaction, les canaux de conduction fluidique et les espaces où la vitesse de diffusion des liquides est ralentie.

14. Membrane d'analyse (30 ; 40) selon l'une quelconque des revendications 1 à 11, **caractérisée en ce qu'**elle est façonnée dans une feuille de matériau en fibre de verre dont une des faces, dite face inférieure, est revêtue d'une couche de renfort mécanique, et **en ce que** le contour du réseau formé par les zones de dépôt et de réaction, par les canaux de conduction fluidique et par les micro-canaux des espaces où la vitesse de diffusion des liquides est ralentie est gravée dans la masse du matériau en fibre de verre jusqu'à atteindre la surface de la couche de renfort mécanique.
